# EUROPEAN PATENT APPLICATION

(11) **EP 3 905 192 A1**
(43) Date of publication of application: **03.11.2021**
(21) Application number: 19904498.3
(22) Date of filing: 11.10.2019
(51) Int. Cl.: G06T 7/00

(54) **REGION IDENTIFICATION DEVICE, METHOD, AND PROGRAM**

(30) Priority: 27.12.2018 JP 2018244309
(71) Applicant: FUJIFILM Corporation, Tokyo 106-8620 (JP)
(72) Inventor: ICHINOSE Akimichi, Tokyo 107-0052 (JP); KITAMURA Yoshiro, Tokyo 107-0052 (JP)
(74) Representative: Klunker IP Patentanwälte PartG mbB
(86) International application number: PCT/JP2019/040218
(87) International publication number: WO 2020/137092

(57) **Abstract**

A region specification apparatus, a region specification method, and a region specification program efficiently specify any object included in an input image. A convolutional neural network (30) of an object specification unit (22) generates a convolutional feature map (M0) from an input image (S0). A first discriminator (40) selects an anchor based on a similarity in shape and size to a ground truth box including an object candidate from among a plurality of anchors having various shapes and various sizes. The first discriminator (40) specifies an object candidate region (P0) in the input image (S0) based on the selected anchor (43).

## Description

### BACKGROUND OF THE INVENTION

### 1. Field of the Invention

The present disclosure relates to a region specification apparatus, a region specification method, and a region specification program that specify a region of an object included in an image.

### 2. Description of the Related Art

In recent years, advances in medical equipment such as a computed tomography (CT) apparatus and a magnetic resonance imaging (MRI) apparatus have made it possible to perform diagnostic imaging using a higher quality three-dimensional image having higher resolution. A region such as an organ and a lesion included in such a three-dimensional image has also been automatically extracted. As such a method for extracting a region from an image, a method of using a discriminator trained by machine learning such as deep learning has been proposed. In particular, Faster-RCNN (Regions with CNN features) is known as a convolutional neural network (CNN) used in deep learning (see Ren, Shaoqing, et al. "Faster R-CNN: Towards real-time object detection with region proposal networks", Advances in neural information processing systems, 2015, and US9858496B).

The Faster-RCNN is composed of convolutional layers that extract feature values from an input image to generate a feature map, region proposal networks (RPN) that specify an object candidate region, and a classification network that receives the feature map and the object candidate region as an input to output the results of category classification and regression of the object. In the RPN of the Faster-RCNN, rectangular regions called anchors having a plurality of aspect ratios and sizes are defined in advance. In the RPN, a plurality of types of anchors are applied to each pixel position of the feature map generated from the input image, and an anchor having the highest overlap ratio with an object candidate included in the input image is selected. Then, in the RPN, by using the selected anchor, processing of regressing (that is, transforming or moving) the anchor is performed on all the pixels of the feature map such that the anchor matches with a rectangle (ground truth box) surrounding the object candidate, and then the position and size of the anchor regressed to match with the ground truth box are output from the RPN as an object candidate region in the input image. After that, in the classification network, the object candidate region in the input image is classified based on the object candidate region and the feature map.

Further, in order to efficiently specify a person from the image by using CNN, a method of using a vertically long anchor having an aspect ratio of 1:2 which is close to an aspect ratio in a state in which the person is standing, from among the plurality of types of anchors has been proposed (JP2017-191501A).

### SUMMARY OF THE INVENTION

In the methods described in US9858496B and Ren, Shaoqing, et al. "Faster R-CNN: Towards real-time object detection with region proposal networks", Advances in neural information processing systems, 2015, in the RPN, an anchor having the highest overlap ratio with the ground truth box is selected from among the plurality of types of anchors. Therefore, in the methods described in US9858496B and Ren, Shaoqing, et al. "Faster R-CNN: Towards real-time object detection with region proposal networks", Advances in neural information processing systems, 2015, in a case of performing processing of transforming or moving the anchor so as to surround the ground truth box, a computation amount for the processing may increase depending on the shape and size of the object candidate. Further, the method described in JP2017-191501A uses a vertically long anchor having an aspect ratio of 1:2 so as to specify a person. For this reason, the method described in JP2017-191501A may efficiently specify a person from the image, but may not always efficiently specify an object other than a person.

The present invention has been made in view of the above circumstances, and an object thereof is to efficiently specify any object included in an input image.

A region specification apparatus according to the present disclosure that specifies a region of an object included in an input image, the apparatus comprises
a first discriminator that specifies an object candidate included in the input image,
in which the first discriminator has a component configured to select an anchor based on a similarity in shape and size to a ground truth box including the object candidate from among a plurality of anchors having various shapes and various sizes, predict at least one of movement or transformation of the selected anchor, and specify an object candidate region surrounding the object candidate.

The region specification apparatus according to the present disclosure may further comprise a display controller that displays the selected anchor on a display unit.

Further, in the region specification apparatus according to the present disclosure, the display controller may display the input image in which the object candidate region is specified, on the display unit.

In addition, the region specification apparatus according to the present disclosure may further comprise a convolution unit that generates a convolutional feature map from the input image,
in which the first discriminator may specify the object candidate region based on the convolutional feature map.

The region specification apparatus according to the present disclosure may further comprise a second discriminator that specifies a category of the object candidate included in the object candidate region.

Alternatively, the region specification apparatus according to the present disclosure may further comprise a second discriminator that specifies a category of the object candidate based on the convolutional feature map and the object candidate region.

Further, in the region specification apparatus according to the present disclosure, the second discriminator may correct the object candidate region.

Further, in the region specification apparatus according to the present disclosure, the second discriminator may discriminate a contour of the object candidate in the object candidate region.

A region specification method according to the present disclosure that specifies a region of an object included in an input image, the method comprises
specifying an object candidate included in the input image by a first discriminator having a component configured to select an anchor based on a similarity in shape and size to a ground truth box including the object candidate included in the input image from among a plurality of anchors having various shapes and various sizes, predict at least one of movement or transformation of the selected anchor, and specify an object candidate region surrounding the object candidate.

Moreover, the region specification method according to the present disclosure may also be provided as a program to be executed by a computer.

Another region specification apparatus according to the present disclosure comprises
a memory that stores a command for causing a computer to execute processing of specifying a region of an object included in an input image, and
a processor configured to execute the stored command, in which the processor executes processing of
specifying an object candidate included in the input image by functioning as a first discriminator having a component configured to select an anchor based on a similarity in shape and size to a ground truth box including the object candidate included in the input image from among a plurality of anchors having various shapes and various sizes, predict at least one of movement or transformation of the selected anchor, and specify an object candidate region surrounding the object candidate.

According to the present disclosure, it is possible to reduce a computation amount for at least one processing of movement or transformation of an anchor for specifying an object candidate region. Further, it is possible to efficiently specify an object other than a person.

### BRIEF DESCRIPTION OF THE DRAWINGS

Fig. 1 is a hardware configuration diagram showing an outline of a diagnosis support system to which a region specification apparatus according to an embodiment of the present disclosure is applied.
Fig. 2 is a diagram showing a schematic configuration of the region specification apparatus according to the embodiment of the present disclosure.
Fig. 3 is a schematic block diagram showing a configuration of an object specification unit.
Fig. 4 is a diagram showing a configuration of an RPN.
Fig. 5 is a diagram for explaining selecting an anchor.
Fig. 6 is a diagram for explaining selecting another anchor.
Fig. 7 is a diagram for explaining selecting still another anchor.
Fig. 8 is a diagram showing a result screen.
Fig. 9 is a flowchart showing processing performed in the present embodiment.

### DESCRIPTION OF THE PREFERRED EMBODIMENTS

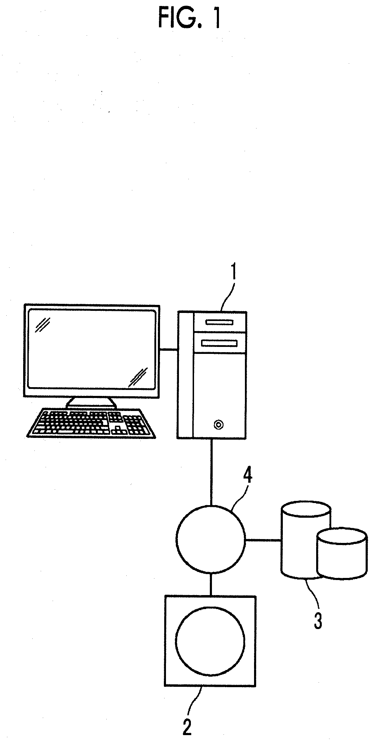

Hereinafter, an embodiment of the present disclosure will be described with reference to the drawings. Fig. 1 is a hardware configuration diagram showing an outline of a diagnosis support system to which a region specification apparatus according to the embodiment of the present disclosure is applied. As shown in Fig. 1, in the diagnosis support system, a region specification apparatus 1, a three-dimensional image capturing apparatus 2, and an image storage server 3 according to the present embodiment are connected to communicate with one another via a network 4.

The three-dimensional image capturing apparatus 2 is an apparatus that generates a three-dimensional image representing a site of a subject as a diagnosis target by capturing the site, and specific examples thereof include a CT apparatus, an MRI apparatus, and a positron emission tomography (PET) apparatus. The three-dimensional image generated by the three-dimensional image capturing apparatus 2 is transmitted to and stored in the image storage server 3. In the present embodiment, the three-dimensional image capturing apparatus 2 is, for example, a CT apparatus, and a CT image including a site of a subject as a diagnosis target is generated as a three-dimensional image. In addition, the three-dimensional image consists of a plurality of tomographic images.

The image storage server 3 is a computer that stores and manages various data, and comprises a large-capacity external storage device and database management software. The image storage server 3 communicates with another apparatus via a wired or wireless network 4 to transmit and receive image data and the like. Specifically, the image storage server 3 acquires various data including the image data of the three-dimensional image generated by the three-dimensional image capturing apparatus 2 via the network, and stores and manages the acquired data in a recording medium such as a large-capacity external storage device. A storage format of the image data and the communication between the apparatuses via the network 4 are based on a protocol such as digital imaging and communication in medicine (DICOM).

The region specification apparatus 1 is an apparatus, as one computer on which the region specification program according to the present embodiment is installed. The computer may be a workstation or a personal computer directly operated by a doctor who makes diagnosis, or may be a server computer connected to the workstation or the personal computer via a network. The region specification program is distributed by being recorded in a recording medium such as a digital versatile disc (DVD) or a compact disc read only memory (CD-ROM), and is installed on a computer from the recording medium. Alternatively, the region specification program is stored in a storage device of a server computer or a network storage connected to the network to be accessible from the outside, and is downloaded and installed on the computer which is used by the doctor according to a request.

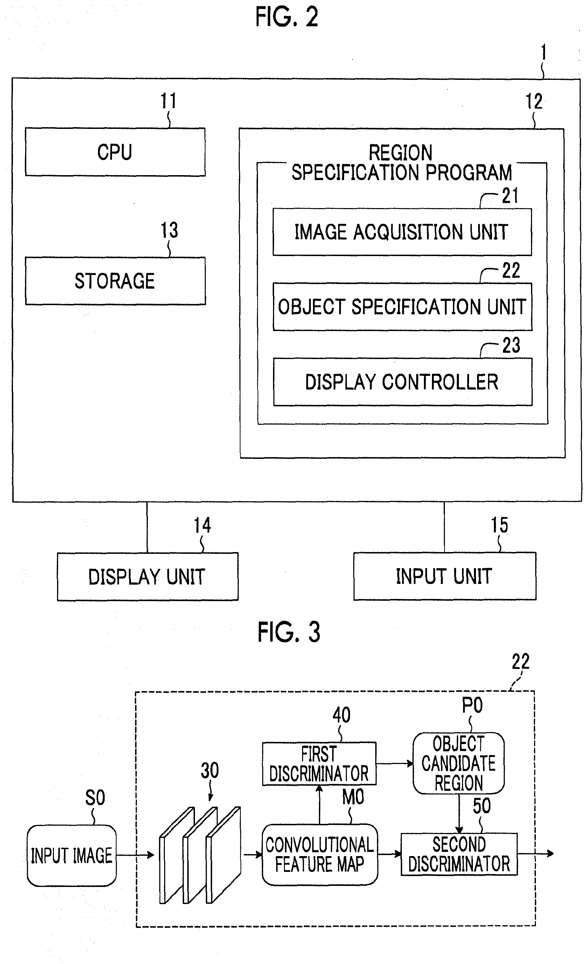

Fig. 2 is a diagram showing the schematic configuration of the region specification apparatus which is realized by installing and executing the region specification program on a computer. As shown in Fig. 2, the region specification apparatus 1 comprises a central processing unit (CPU) 11, a memory 12, and a storage 13 as a standard workstation configuration. Further, a display unit 14 such as a liquid crystal display, and an input unit 15 such as a keyboard and a mouse are connected to the region specification apparatus 1.

The storage 13 includes a hard disk drive or the like, and stores the input image acquired from the image storage server 3 via the network 4 and various information including information necessary for processing.

Further, the region specification program is stored in the memory 12. The memory 12 may be a volatile memory which is a temporary recording medium or a non-volatile memory which is a non-temporary recording medium. In a case where the memory 12 is a volatile memory, the region specification program is read out from another location by the CPU 11 and executed by being temporarily stored in the memory 12. Further, the region specification program may be distributed by being recorded on an external recording medium (not shown), and may be installed by the CPU 11 from the recording medium. Alternatively, the region specification program may be stored in a server connected to the network or the like to be accessible from the outside, and installed and executed by being downloaded on the memory 12 or the storage 13 by the CPU 11 according to a request. As processing to be executed by the CPU 11, the region specification program defines image acquisition processing of acquiring an input image S0 as a target specifying an object region, object specification processing of specifying an object included in the input image S0, and display control processing of displaying the input image S0 in which an anchor and an object candidate region to be described later are specified. The input image may be a three-dimensional image or a two-dimensional image. For the sake of explanation, in the present embodiment, for example, a tomographic image representing one tomographic plane of a three-dimensional image acquired by a CT apparatus is used as an input image, but the present invention is not limited thereto.

The CPU 11 executes the processing according to the program, and thereby the computer functions as an image acquisition unit 21, an object specification unit 22, and a display controller 23.

The image acquisition unit 21 includes an interface or the like that acquires the input image S0 from the image storage server 3. In a case where the input image S0 is already stored in the storage 13, the image acquisition unit 21 may acquire the input image S0 from the storage 13.

The object specification unit 22 specifies an object included in the input image S0. For this reason, the object specification unit 22 includes Faster-RCNN. Fig. 3 is a schematic block diagram showing the configuration of the object specification unit 22. As shown in Fig. 3, the object specification unit 22, that is, the Faster-RCNN has a convolutional neural network 30 that generates a convolutional feature map M0 from the input image S0, a first discriminator 40 that specifies an object candidate region P0 included in the convolutional feature map M0, and a second discriminator 50 that specifies a category of an object candidate included in the object candidate region based on the object candidate region P0. The convolutional neural network 30 corresponds to a convolution unit of the present disclosure.

The convolutional neural network 30 has a plurality of layers such as a convolutional layer, a pooling layer, and a deconvolutional layer. In a case where the input image S0 is received as an input, the convolutional neural network 30 outputs the convolutional feature map M0 to which the features of the input image S0 are mapped. The convolutional neural network 30 in the present embodiment has a convolutional layer and a pooling layer. In this case, the size of the convolutional feature map M0 is smaller than the size of the input image S0. For example, in a case where the convolutional neural network 30 has one or two pooling layers, the size of the convolutional feature map M0 is 1/4 or 1/16 with respect to the input image S0, respectively. Alternatively, in a case where the convolutional neural network 30 does not have a pooling layer or has a deconvolutional layer, the size of the convolutional feature map M0 is the same as that of the input image S0. Here, as the convolutional neural network, a known model such as the Zeiler and Fergus model or the Simonyan and Zisserman model, which are described in Ren, Shaoqing, et al. "Faster R-CNN: Towards real-time object detection with region proposal networks", Advances in neural information processing systems, 2015, can be used.

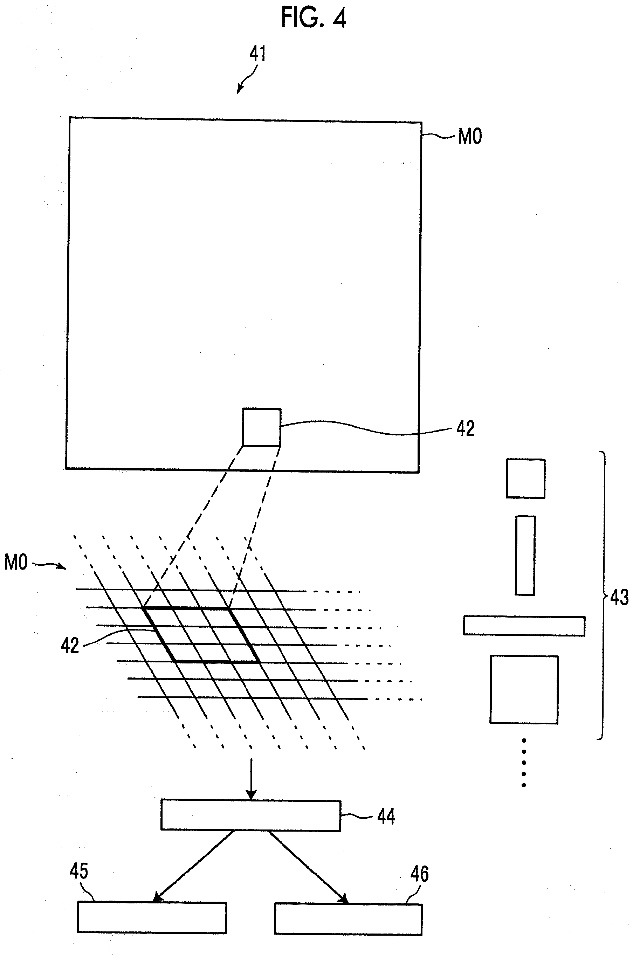

The first discriminator 40 has a translation-invariant region proposal network (hereinafter, referred to as an RPN 41). The RPN 41 corresponds to a component of the present disclosure. The RPN 41 specifies an object candidate region included in the convolutional feature map M0 which is received from the convolutional neural network 30 as an input. Fig. 4 is a diagram showing the configuration of the RPN. As shown in Fig. 4, the RPN 41 performs convolution on the convolutional feature map M0 with a sliding window 42. The sliding window 42 extracts signal values in a region of n × n (for example, 3 × 3) pixels centered on each pixel on the convolutional feature map M0. Then, the RPN 41 extracts the signal values in the region of n × n pixels in the convolutional feature map M0 while sequentially moving the sliding window 42 on the convolutional feature map M0. In the present embodiment, the center pixel position of the sliding window 42 in the convolutional feature map M0 is a target pixel position for detecting an object candidate.

Here, in the RPN 41, a plurality of anchors 43 which is set at the center position of the sliding window 42 set on the convolutional feature map M0, that is, the target pixel position in the convolutional feature map M0 are defined in advance. The anchors 43 are rectangular regions having various sizes and various aspect ratios. For example, in the present embodiment, it is assumed that the RPN is defined to have nine types of anchors 43 in total. The nine types of anchors 43 have three height-to-width aspect ratios of 1:1, 2:1, and 1:2, and three sizes of 128 pixels, 256 pixels, and 512 pixels as areas, but the aspect ratios and the areas are not limited to the values described above. In addition, the number of the anchors 43 may be defined to be less than nine types, or more than nine types. The number of pixels of the anchor is the number of pixels with respect to the input image S0, and the size of the anchor is also changed according to the size of the convolutional feature map M0. In the present embodiment, the size of the convolutional feature map M0 with respect to the input image S0 and the size of the anchor 43 are examples for explanation, and in practice, various values other than the above-described examples can be taken.

Further, the RPN 41 comprises an intermediate layer 44, a classification layer 45, and a regression layer 46. The intermediate layer 44 performs convolution on the signal values of n × n pixels in the sliding window 42 to derive a representative value of the signal values. The representative value of the signal values can be, for example, an average value, a maximum value, an intermediate value, or the like, but is not limited thereto.

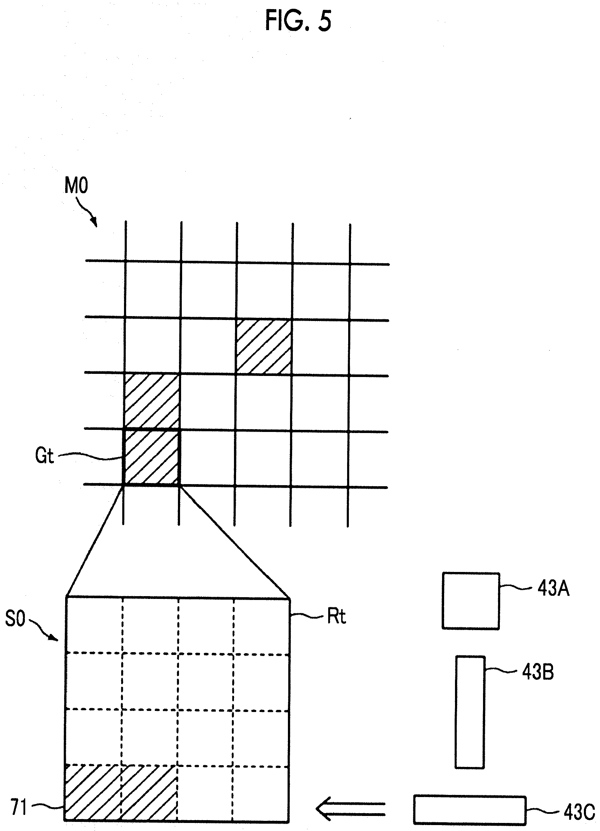

The classification layer 45 determines the presence or absence of an object candidate for the target pixel position of the convolutional feature map M0, and determines the presence or absence of the object candidate in the corresponding pixel position on the input image S0 corresponding to the target pixel position, based on the representative value of the sliding window 42 derived by the intermediate layer 44. Fig. 5 is a diagram schematically showing processing performed by the classification layer 45. In the convolutional feature map M0, there is a difference in signal values between the object candidate and the background in which the object candidate is not present. Therefore, the classification layer 45 compares the representative value derived at the target pixel position with a predetermined threshold value, and determines whether the target pixel position is in the object candidate region or the background region. Here, in Fig. 5, the object candidates are present at the pixel positions where diagonal lines are given in the convolutional feature map M0. That is, the pixel positions where diagonal lines are given in the convolutional feature map M0 are in the object candidate regions.

In a case where determination is made that the target pixel position is in the object candidate region, the classification layer 45 sets an anchor 43 with respect to the target pixel position in the convolutional feature map M0. For setting the anchor 43, the classification layer 45 refers to the corresponding pixel position of the input image S0 which corresponds to the target pixel position in the convolutional feature map M0 determined to be in the object candidate region. For example, with regard to the target pixel position Gt shown in Fig. 5, the classification layer 45 refers to the plurality of corresponding pixel positions corresponding to the target pixel position Gt in the input image S0. Here, in the present embodiment, assuming that the convolutional feature map M0 has a size of 1/16 of the input image S0, the corresponding pixel positions corresponding to the target pixel position Gt in the input image S0 consist of 4 × 4 = 16 pixels. A region of the input image S0 consisting of the plurality of corresponding pixel positions is referred to as a corresponding pixel region Rt.

The classification layer 45 determines the presence or absence of the object candidate for each corresponding pixel position in the corresponding pixel region Rt of the input image S0. In the corresponding pixel region Rt, there is a difference in signal values between the object candidate and the background in which the object candidate is not present. Therefore, the classification layer 45 compares the signal value of each corresponding pixel position in the corresponding pixel region Rt with a predetermined threshold value, and determines whether each corresponding pixel position in the corresponding pixel region Rt is in the object candidate region or the background region. Here, in Fig. 5, the object candidate is present at the corresponding pixel positions where diagonal lines are given in the corresponding pixel region Rt. That is, the pixel positions where the diagonal lines are given in the corresponding pixel region Rt of the input image S0 are in the object candidate region. A region consisting of pixels including the object candidate in the corresponding pixel region Rt is a ground truth box 71.

Subsequently, the classification layer 45 selects an anchor. Specifically, the classification layer 45 selects an anchor based on the similarity in shape and size to the ground truth box including the object candidate from among the plurality of anchors 43. Here, as shown in Fig. 5, the pixel positions in which the object candidate is present in the corresponding pixel region Rt, that is, the ground truth box 71 consists of two pixels arranged horizontally. In this case, the classification layer 45 selects an anchor having the most similar size and aspect ratio to the ground truth box 71 from among a plurality of anchors 43 (43A, 43B, ...). For example, as shown in Fig. 5, in a case where RPN 41 has three types of anchors 43A, 43B, and 43C having height-to-width aspect ratios of 1:1, 2:1, and 1:2, respectively, the anchor 43C having an aspect ratio of 1:2 is selected. In Fig. 5, for ease of explanation, the sizes of the anchors 43A, 43B, and 43C are 1 × 1 pixel, 2 × 0.5 pixels, and 0.5 × 2 pixels in height and width, respectively.

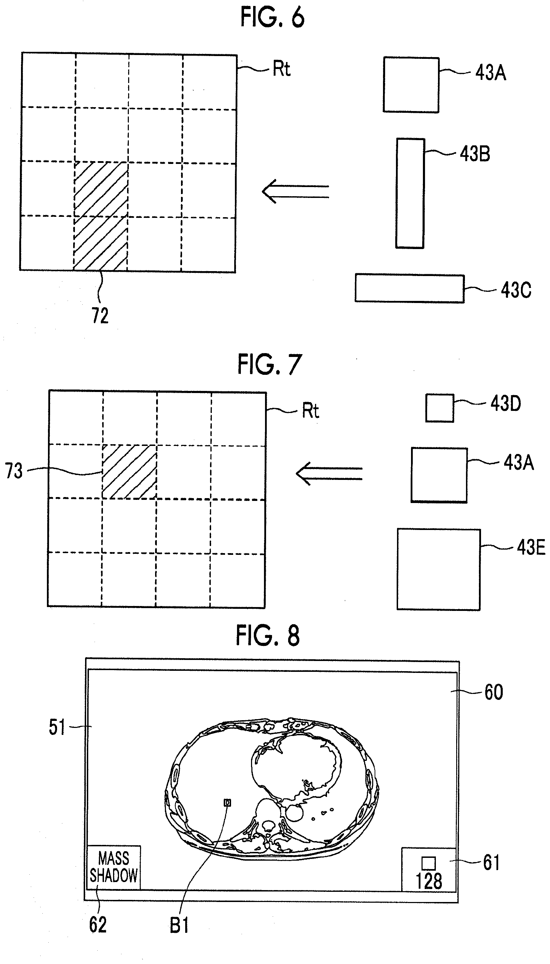

On the other hand, as shown in Fig. 6, the pixel positions in which the object candidate is present in the corresponding pixel region Rt, that is, the ground truth box 72 consists of two pixels arranged vertically. In this case, as shown in Fig. 6, in a case where the RPN 41 has three types of anchors 43A, 43B, and 43C having height-to-width aspect ratios of 1:1, 2:1, and 1:2, respectively, the anchor 43B having an aspect ratio of 2:1 is selected. Also in Fig. 6, for ease of explanation, the sizes of the anchors 43A, 43B, and 43C are 1 × 1 pixel, 2 × 0.5 pixels, and 0.5 × 2 pixels in height and width, respectively.

Further, as shown in Fig. 7, the pixel position in which the object candidate is present in the corresponding pixel region Rt, that is, the ground truth box 73 consists of one pixel. In this case, as shown in Fig. 7, in a case where the RPN 41 has three types of anchors 43D, 43A, and 43E each having a height-to-width aspect ratio of 1:1 and a different size, the anchor 43A having an intermediate size is selected. In Fig. 7, for ease of explanation, the sizes of the anchors 43D, 43A, and 43E are 0.5 × 0.5 pixels, 1 × 1 pixel, and 1.5 × 1.5 pixels, respectively.

The regression layer 46 predicts at least one of the movement or transformation of the selected anchor to specify an object candidate region surrounding the object candidate in the input image S0. That is, in a case where the object candidate is included in the target pixel position in the convolutional feature map M0, the regression layer 46 calculates a difference between the anchor 43 selected by the classification layer 45 and the ground truth box, and specifies the object candidate region in the input image S0. Here, the difference means the amount of movement and the amount of transformation of the selected anchor 43 for making the selected anchor 43 match with the ground truth box. The amount of movement is an amount of movement on the coordinates of the input image S0, and the amount of movement indicates respective amounts of movement in the XY directions in a case where the input image S0 is two-dimensional, and the amount of movement indicates respective amounts of movement in the XYZ directions in a case where the input image S0 is three-dimensional. The amount of transformation indicates respective enlargement ratios in the XY directions in a case where the input image S0 is two-dimensional, and the amount of transformation is respective enlargement ratios in the XYZ directions in a case where the input image S0 is three-dimensional.

The regression layer 46 specifies the object candidate region P0 in the input image S0 based on the calculated difference. That is, the regression layer 46 specifies the object candidate included in the input image S0, that is, a region matching with the ground truth box, as the object candidate region P0.

Here, the first discriminator 40 is translation-invariant, but the translation-invariance means that the determination criteria for specifying the object candidate region do not change regardless of the position on the image to be received as an input (here, the convolutional feature map M0). For example, it means that the methods of selecting, moving, and transforming the anchor are the same regardless of the size and position of the object included in the image to be received as an input.

In the present embodiment, the training of the first discriminator 40, that is, the RPN 41 is performed as follows. That is, the convolutional feature map M0 for various input images is generated, and a teaching rectangular region circumscribing an object to be discriminated is cut out from the convolutional feature map M0. Then, an anchor having the most similar size and aspect ratio to the object included in the teaching rectangular region of the input image (referred to as an input teaching rectangular region) which corresponds to the pixel position including the center coordinates of the rectangular region, is selected from among the plurality of anchors 43. Then, the difference between the object in the input teaching rectangular region and the selected anchor is output, and in order to minimize the difference, the RPN 41 is trained so as to perform at least one of movement or transformation of the selected anchor. In this case, the RPN 41 may be trained by using the stochastic gradient descent method or the backpropagation method. Here, the difference means the amount of movement and the amount of transformation of the selected anchor for making the anchor match with the input teaching rectangular region. For example, in a case where the input image is two-dimensional, the difference indicates respective amounts of movement of the anchor in the X and Y directions, and respective amounts of transformation of the anchor in the X and Y directions, for making the center of the anchor match with the center of the input teaching rectangular region. Since the amount of transformation is synonymous with enlargement or reduction in size of the anchor, the amount of transformation is synonymous with the enlargement ratio.

The second discriminator 50 specifies the category of the object candidate based on the object candidate region P0 specified by the first discriminator 40. The second discriminator 50 is the same as those described in US9858496B and Ren, Shaoqing, et al. "Faster R-CNN: Towards real-time object detection with region proposal networks", Advances in neural information processing systems, 2015. For example, the second discriminator 50 includes a neural network having a pooling layer and one or more fully connected layers, and specifies the category of the object candidate as follows. First, the second discriminator 50 cuts out the object candidate region P0 specified by the first discriminator 40 from the convolutional feature map M0, and resizes the cut-out object candidate region P0 to a predetermined size, as necessary. Then, the second discriminator 50 compares the cut-out object candidate region P0 with a plurality of types of objects, and specifies the category of the object candidate region P0.

Specifically, the second discriminator 50 outputs scores indicating the probability of being a specific object for the cut-out object candidate region P0, and specifies the object candidate region P0 to an object having the highest score. For example, in the present embodiment, in a case where the input image S0 is a CT image, the object candidate region P0 is specified to any one of categories such as an infiltrative shadow, a mass shadow, a ground glass opacity, a centrilobular nodule shadow, a noncentrilobular nodule shadow, a reticular shadow, a linear shadow, interlobular septal thickening, honeycomb lungs, and cysts which are lung diseases. On the other hand, in a case where the score is not the threshold value or more, the second discriminator 50 specifies the category of the object candidate region P0 to a background.

The training of the second discriminator 50 is performed such that in a case where images of various objects are set as teaching images and the teaching images are received as an input, the score of the category of the object included in the received teaching image is 100%. In this case, as in the first discriminator 40, the second discriminator 50 may be trained by using the stochastic gradient descent method or the backpropagation method.

The second discriminator 50 may also specify the position and size of the rectangle circumscribing the object. In this case, processing of correcting the position and size of the object candidate region P0 in the convolutional feature map M0 is performed such that the cut-out object candidate region P0 circumscribes the object more accurately.

Further, the second discriminator 50 may specify the contour of the object included in the object candidate region P0.

The display controller 23 displays the anchor selected by the first discriminator 40 on the display unit 14. In addition, the specification result of the category by the second discriminator 50 is displayed on the display unit 14. Fig. 8 is a diagram showing a result screen on the display unit 14. As shown in Fig. 8, the input image S0 is displayed on the result screen 60. Further, the lower right corner of the result screen 60 includes an anchor display region 61 for displaying the type and size of the anchor used. Fig. 8 shows that an anchor having an aspect ratio of 1:1 and an area of 128 pixels is selected. Furthermore, a rectangle B1 surrounding the object specified in the input image S0 is displayed. In addition, the lower left corner of the result screen 60 includes a category display region 62 for displaying the category of the object of the rectangle B1. Here, "mass shadow" is displayed as the category of the specified object.

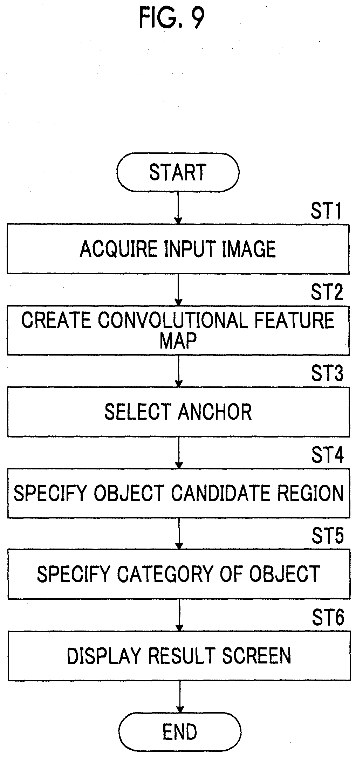

Next, processing performed in the present embodiment will be described. Fig. 9 is a flowchart showing processing performed in the present embodiment. First, the image acquisition unit 21 acquires an input image S0 (Step ST1). Next, the convolutional neural network 30 of the object specification unit 22 generates a convolutional feature map M0 from the input image S0 (Step ST2). Then, the first discriminator 40 selects an anchor 43 (Step ST3), and specifies an object candidate region P0 in the input image S0 based on the selected anchor 43 (Step ST4). Then, the second discriminator 50 specifies a category of the object in the object candidate region P0 (Step ST5). Further, the display controller 23 displays a result screen 60 including the selected anchor and the category of the specified object on the display unit 14 (Step ST6), and the processing ends.

Here, in the methods described in US9858496B and Ren, Shaoqing, et al. "Faster R-CNN: Towards real-time object detection with region proposal networks", Advances in neural information processing systems, 2015, the anchor is selected based on the size of the overlap between the anchor and the ground truth box. For example, in a case of the ground truth box 71 as shown in Fig. 5, the largest square anchor 43E shown in Fig. 7 is selected. On the other hand, in the present embodiment, the anchor is selected based on the similarity in shape and size to the ground truth box. Therefore, as described above, the anchor 43C is selected in the present embodiment.

As described above, in the present embodiment, the object candidate region P0 is specified based on the anchor. Therefore, in a case of the ground truth box 71 as shown in Fig. 6, the anchor 43C rather than the anchor 43E can reduce the computation amount for at least one processing of movement or transformation of the anchor for making the anchor match with the ground truth box 71. Accordingly, according to the present embodiment, the object included in the input image S0 can be specified quickly and efficiently.

Further, in the present embodiment, since the anchor is selected so as to be similar to the ground truth box of the object candidate, an object having any shape or aspect ratio can be specified in the input image S0. For example, the present embodiment can also be applied to a case of specifying a lesion such as cancer in a case where the input image S0 is a medical image as described above, or a case of specifying a person, an animal, an automobile, and the like included in the image.

In the above-described embodiment, the first discriminator 40 and the second discriminator 50 include neural networks, but the present invention is not limited thereto. For example, a support vector machine (SVM) and a decision tree may be provided.

Further, in the above-described embodiment, the object specification unit 22 comprises the convolutional neural network 30, and the convolutional neural network 30 generates the convolutional feature map M0 and in the generated convolutional feature map M0, the object candidate region P0 is specified, but the present invention is not limited thereto. In the object specification unit 22, the first discriminator 40 may specify the object candidate region P0 in the input image S0, without comprising the convolutional neural network 30. In this case, the second discriminator 50 may specify the category of the object based on the convolutional feature map M0, but may specify the category of the object by cutting out the object candidate region P0 from the input image S0.

Further, in the above-described embodiment, the convolutional neural network 30 has a convolutional layer and a pooling layer, but the present invention is not limited thereto. The convolutional neural network 30 may have no pooling layer or may further have a deconvolutional layer. In a case where the convolutional neural network 30 does not have a pooling layer or has a deconvolutional layer, the size of the convolutional feature map M0 is the same as that of the input image S0.

Further, in the above-described embodiment, for example, as a hardware structure of a processing unit that executes various processing such as processing performed by the image acquisition unit 21, the object specification unit 22, and the display controller 23, the following various processors may be used. Examples of the various processors include, as described above, a CPU which is a general-purpose processor functioning as various processing units by executing software (program), a programmable logic device (PLD) which is a processor having a changeable circuit configuration after manufacturing a field programmable gate array (FPGA) or the like, and a dedicated electric circuit such as an application specific integrated circuit (ASIC) which is a processor having a circuit configuration specifically designed to execute specific processing.

One processing unit may be configured by one of the various processors, or may be configured by a combination of two or more processors having the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and server, there is a form in which one processor is configured by a combination of one or more CPUs and software, and the processor functions as the plurality of processing units. Secondly, as represented by a system on chip (SoC) or the like, there is a form in which a processor that realizes the function of the entire system including the plurality of processing units by one integrated circuit (IC) chip is used. As described above, the various processing units are configured by using one or more various processors as a hardware structure.

Further, as the hardware structure of the various processors, more specifically, an electric circuit (circuitry) in which circuit elements such as semiconductor elements are combined may be used.

### Explanation of References

1: region specification apparatus
2: three-dimensional image capturing apparatus
3: image storage server
4: network
11: CPU
12: memory
13: storage
14: display unit
15: input unit
21: image acquisition unit
22: object specification unit
23: display controller
30: convolutional neural network
40: first discriminator
41: RPN
42: sliding window
42A: center pixel
43, 43A to 43F: anchor
44: intermediate layer
45: classification layer
46: regression layer
50: second discriminator
60: result screen
61: anchor display region
62: category display region
71, 72, 73: ground truth box
B1: rectangle
Gt: target pixel position
Rt: corresponding pixel region
M0: convolutional feature map
S0: input image
P0: object candidate region

## Claims

1. A region specification apparatus that specifies a region of an object included in an input image, the apparatus comprising:
a first discriminator that specifies an object candidate included in the input image,
wherein the first discriminator has a component configured to select an anchor based on a similarity in shape and size to a ground truth box including the object candidate from among a plurality of anchors having various shapes and various sizes, predict at least one of movement or transformation of the selected anchor, and specify an object candidate region surrounding the object candidate.

2. The region specification apparatus according to claim 1, further comprising:
a display controller that displays the selected anchor on a display unit.

3. The region specification apparatus according to claim 2,
wherein the display controller displays the input image in which the object candidate region is specified, on the display unit.

4. The region specification apparatus according to any one of claims 1 to 3, further comprising:
a convolution unit that generates a convolutional feature map from the input image,
wherein the first discriminator specifies the object candidate region based on the convolutional feature map.

5. The region specification apparatus according to any one of claims 1 to 4, further comprising:
a second discriminator that specifies a category of the object candidate included in the object candidate region.

6. The region specification apparatus according to claim 4, further comprising:
a second discriminator that specifies a category of the object candidate based on the convolutional feature map and the object candidate region.

7. The region specification apparatus according to claim 5 or 6,
wherein the second discriminator corrects the object candidate region.

8. The region specification apparatus according to any one of claims 5 to 7,
wherein the second discriminator discriminates a contour of the object candidate in the object candidate region.

9. A region specification method that specifies a region of an object included in an input image, the method comprising:
specifying an object candidate included in the input image by a first discriminator having a component configured to select an anchor based on a similarity in shape and size to a ground truth box including the object candidate included in the input image from among a plurality of anchors having various shapes and various sizes, predict at least one of movement or transformation of the selected anchor, and specify an object candidate region surrounding the object candidate.

10. A region specification program causing a computer to execute a region specification method that specifies a region of an object included in an input image and the program causing the computer to execute a process, the process comprising:
specifying an object candidate included in the input image by a first discriminator having a component configured to select an anchor based on a similarity in shape and size to a ground truth box including the object candidate included in the input image from among a plurality of anchors having various shapes and various sizes, predict at least one of movement or transformation of the selected anchor, and specify an object candidate region surrounding the object candidate.
